# EUROPEAN PATENT APPLICATION

(11) **EP 2 152 000 A1**
(43) Date of publication of application: **10.02.2010**
(21) Application number: 08161813.4
(22) Date of filing: 05.08.2008
(51) Int. Cl.: H04N 7/169

(54) **A method and apparatus for providing digital view protection by offsetting frames**

(71) Applicant: Cabot Communications Ltd, Filwood Road Bristol BS16 3RY (GB)
(72) Inventor: Wyatt, Martyn, South Glamorgan CF3 5XA (GB)
(74) Representative: Freeman, Avi

(57) **Abstract**

The invention provides a method and apparatus for encoding a digital video broadcast, the method comprising: at the broadcaster processing frames of a video so as to offset or shift frames in accordance with a selected algorithm; transmitting the offset or shifted frames; transmitting details of the algorithm used to calculate frame offsets so as to enable a receiver to determine the algorithm and to process received images and remove the offsets or shifts.

## Description

The present invention relates to a method and apparatus for encoding and/or decoding a digital video transmission.

In embodiments, the present invention relates to a method and apparatus for providing digital view protection. In particular the invention relates to a method and apparatus for providing view protection of events, such as live events, transmitted over a publicly receivable medium, e.g. digital television broadcasts through satellite transmissions or internet television (TV).

As used herein, digital video "broadcast" means the transmission of a digital video signal from a transmitter or "broadcaster" to one or more users.

TV Broadcasts of 'Pay per View' events such as live sporting events or music concerts e.g. football matches, cricket matches & boxing matches are transmitted to subscribers whose digital TV receivers carry additional hardware and expensively manufactured and distributed conditional access (CA) cards. The broadcasters in such cases rely on the value of an event when screened live. Such broadcasts, when watched at a later time are of considerably less value.

It is therefore important that only subscribers can watch a broadcast of the event when it happens live. A view protection mechanism therefore needs primarily to protect the broadcast for the duration of the event and, preferably, a short period thereafter. Although ideally the broadcast would be protected on a longer term basis, once the event has passed and, say, the result of a football or boxing match is widely known, it is of significantly less importance to stop unauthorised viewers from watching the event.

According to a first aspect of the present invention, there is provided a method of encoding a digital video broadcast, the method comprising: at the broadcaster processing frames of a video so as to offset frames in accordance with a selected algorithm; transmitting the offset frames; transmitting details of the algorithm used to calculate frame offsets so as to enable a receiver to determine or utilise the algorithm and to process received images and remove the offsets.

Thus, details of an algorithm used to calculate offsets applied to frames of a video are transmitted together with the offset frames to one or more users such that, at a receiver, it is possible to determine the algorithm and use this to determine the offsets that have been applied to frames of the video. Reverse offsets can then be applied to the received frames and an output video stream constructed free from the image "shake" that would otherwise be perceived by a viewer. The method is simple and robust and does not require an end user to be provided with any complex hardware such as a conditional access card or an appropriately modified receiver.

Preferably, the images and the details of the algorithm are sent by the broadcaster as part of a single signal.

Preferably, the signal comprises a video channel and a data channel transmitted in parallel.

In a preferred example, the algorithm is transmitted embedded within an application of an interactive television language, such as MHEG-5.

Frames may be offset in any appropriate manner. Preferably, the frames are offset by reducing the width and height of the frames (by image compression or cropping) and applying varying offsets to individual sequential frames such that the resultant video, when played back, appears to shake.

Preferably, the offsets are determined using the algorithm.

In one example, the method comprises, at a receiver, utilising the algorithm used to offset the frames and calculating offsets applied to individual frames within the video in accordance with the algorithm.

Preferably, the calculated offsets are applied in reverse to the respective frames so as to remove the offset applied by the broadcaster.

Preferably, the offset is tied to any particular frame using frame identification data such that the right offset is assigned to the right frame and preferably also such that at a receiver the correct reverse offset can be applied.

Any suitable frame identification data may be used. One preferred example is the time stamp of the frame.

Thus, a method and apparatus is provided that enables prevention of unauthorised viewing of digital TV broadcast media. The visual content of the media is 'shaken' at source using a private algorithm with authorised viewing of the media using image stabilisation gained by use of the same algorithm transmitted in tandem with the media broadcast. Thus, unauthorised viewing of digital TV broadcast media is prevented whilst not requiring complex or expensive CA hardware.

Furthermore, since the major value of the broadcast is often linked to the time at which the broadcast is made, even if the private algorithm is "cracked" by pirates or thieves so long as this is not done within the relatively short period that is the duration of the broadcast live event, the value of the broadcast will have been substantially protected.

In other words, in embodiments, the invention renders digital TV media un-viewable through the use of picture shaking. Authorised decoding equipment is given knowledge of the picture shake motions through transmission of an appropriate algorithm and can therefore counter-shake it in real time to render a stable viewable image.

According to a second aspect of the present invention, there is provided apparatus for encoding a digital video broadcast, the apparatus comprising: a processor for determining an offset to be applied to frames of a video so as to displace the frames in accordance with an algorithm; means to combine the displaced frames with details of the algorithm so as to be able to transmit details of the algorithm used to displace the frames with the frames themselves.

Preferably, the apparatus comprises memory containing a stored algorithm used to determine the displacement to be applied to respective frames in a video.

Preferably, the apparatus is arranged to receive a stream of digital video frames and to receive determined offset values for the respective frames and to apply the determined offsets to the frames.

Preferably, the means to combine comprises a digital carousel for producing an output stream of data including video data and a data channel containing details of the algorithm embedded therein.

Preferably, the data channel comprises an MHEG, e.g. MHEG-5, application that contains the algorithm embedded therein.

In one example, the algorithm determines an offset in association with each particular frame's time stamp so as to enable association of offsets with particular frames at the receiver.

According to a third aspect of the present invention, there is provided a method for decoding a digital video broadcast, the method comprising: receiving a digital video broadcast including encrypted video data and data relating to the video data, e.g. a data channel; extracting from the data relating to the video data details of an algorithm by which the video data is encrypted; and decoding the encrypted video data using the algorithm.

In one embodiment, the method comprises extracting the algorithm and the time stamp of received frames so as to be able to determine an offset to be applied to each frame.

Preferably, the method comprises storing the extracted algorithm in memory and using the algorithm to calculate the required offset for each received frame.

Preferably, the method comprises applying the determined offsets to the frames thereby generating an output video stream.

In a preferred embodiment, the method then comprises providing the output video stream comprising the offset frames to a display; and, displaying the output video stream.

According to a fourth aspect of the present invention, there is provided apparatus for decoding a digital video broadcast, the apparatus comprising: a receiver for receiving a digital video broadcast including encrypted video data and data relating to the video data, e.g. a data channel; a processor for extracting from the data channel details of an algorithm by which the video data is encrypted; and, a decoder for decoding the encrypted video data using the algorithm.

Preferably, the decoder is arranged and configured to extract the algorithm and a frame identifier of received frames so as to be able to determine an offset to be applied to each frame.

In one example the frame identifier is a time stamp identifying its position within a sequence of other frames.

Preferably, the apparatus comprises memory to store the extracted algorithm.

Preferably, the apparatus comprises a processor to determine a required offset for a frame and to apply the offset to the frame thereby generating an output video stream.

The invention may be used in any system where digital television is transmitted or broadcast to one or more users. Examples include RF satellite transmission, cable transmission and transmission over other media such as the Internet.

According to one aspect of the present invention there is provided a television system comprising apparatus for encoding a digital video broadcast according to the first aspect of the present invention and one or more apparatuses for decoding a digital video broadcast according to the fourth aspect of the present invention.

Examples of embodiments of the present invention will now be described in detail with reference to the accompanying drawings, in which:
Figure 1 shows a schematic representation of a television transmission system;
Figure 2 shows a schematic representation of a television receiver system; and
Figure 3 shows a schematic representation of Frames from an encoded video data stream; and
Figure 4 shows a schematic representation of a further example of a television transmission and receiver system;

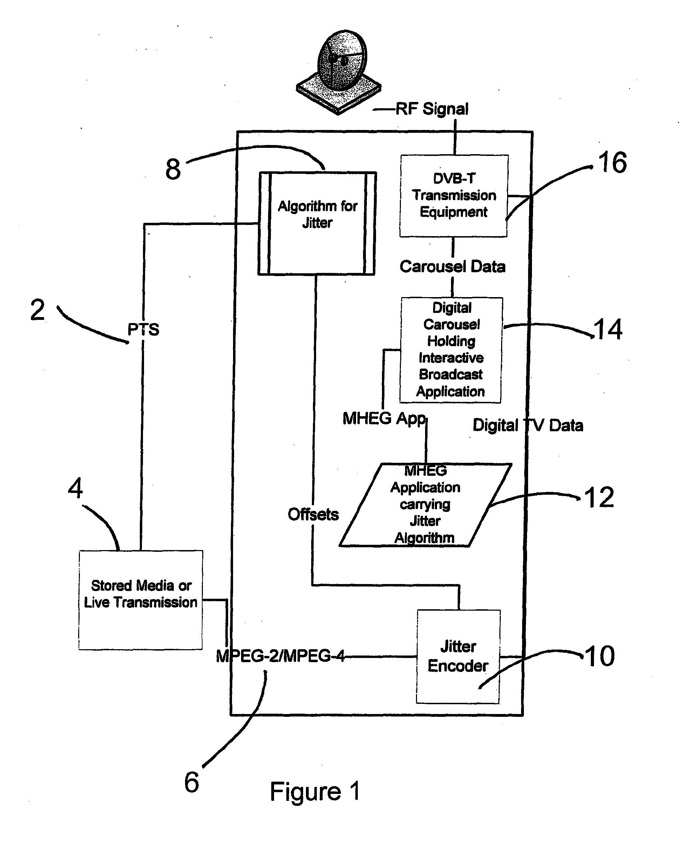

Figure 1 shows a schematic representation of a television transmission system. The system 2 comprises a source 4 of a video. This could be any suitable video source such as stored media or a live transmission. The source 4 provides the video in the form of a digital stream such as an MPEG stream 6, e.g. MPEG2 or MPEG4.

The transmission system 2 comprises an algorithm 8 for jittering the frames of the video as will be explained below. The algorithm 8 may be stored in memory within the transmission system or generated on the fly. A jitter encoder 10 is provided for encoding frames of the video with offsets so as to make the video "unwatchable" when played back. The video is unwatchable in that because of the way that the frames appear to shake when watched in sequence, the displayed image jumps around. In other words, in embodiments, the invention renders digital TV media un-viewable through the use of picture shaking. Authorised decoding equipment is given knowledge of the picture shake motions through transmission of the algorithm used to calculate the position or offset of each frame, and can therefore counter-shake it in real time to render a stable image for display to a viewer.

The algorithm 8 is arranged to calculate offsets for individual frames and to provide these to the jitter encoder 10. The jitter encoder 10 receives the offsets and applies them to the respective frames. It is clearly important that the offset applied to each particular frame is associated with that particular frame in a reliable manner. This may be achieved with the use of frame identifiers used by the algorithm to calculate or determine the offset.

A preferred identifier is a frame's Presentation Time Stamp (PTS). By linking, in the selected algorithm, the offset applied to a frame and the frame's PTS, at the receiver the correspondence between the offset and a particular frame is ensured, such that a correct reverse offset is applied to a particular frame.

The transmission system 2 also includes transmission equipment 16 arranged to transmit a digital signal for receipt by users. This will be described in greater detail below.

The transmission system 2 includes a broadcast application 12, which feeds, together with the output of the jitter encoder 10, into a digital carousel 14. the digital carousel contains and orders all the digital data for transmission from the system 2. The broadcast application may be any suitable broadcast application, examples including Multimedia and Hypermedia Experts Group (MHEG) applications. MHEG-5 is commonly used as a language to describe interactive television services and can be used to describe a presentation of text, images and video.

Importantly, in the present case, the broadcast application includes details of the algorithm 8 and this is provided to the digital carousel 14. The carousel is arranged to receive both the jittered video signal from the jitter encoder and also the MHEG application including the algorithm used to jitter the video embedded within the application. The carousel provides a data stream including both the jittered video signal and the MHEG application to the transmission equipment 16.

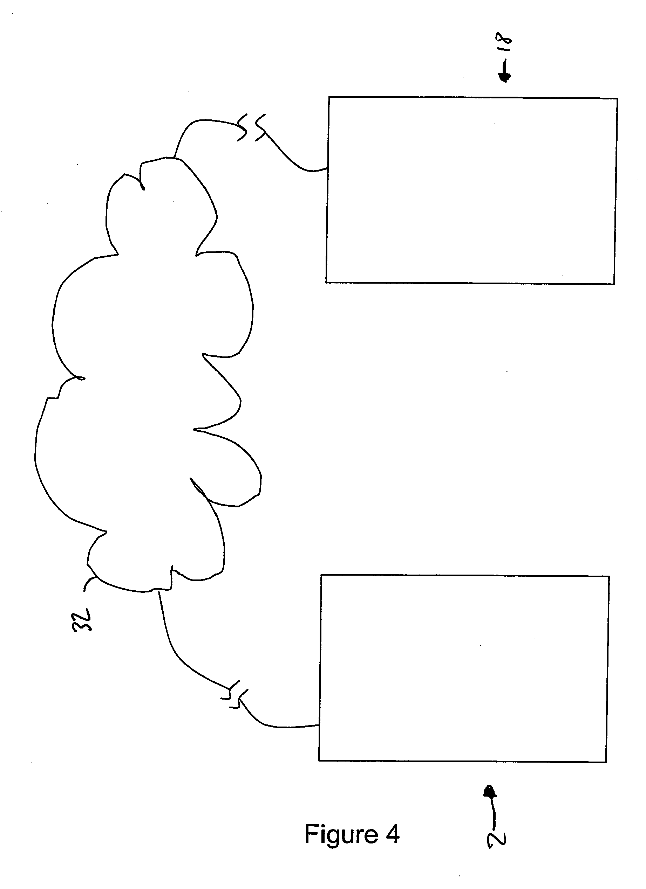

The transmission equipment 16 includes means for actually transmitting the signal to users. In the example shown, this is an RF transnmitter although other means of transmitting the signal to users may be used. For example, transmission or broadcast over a network such as the internet could be used, as described below with reference to Figure 4.

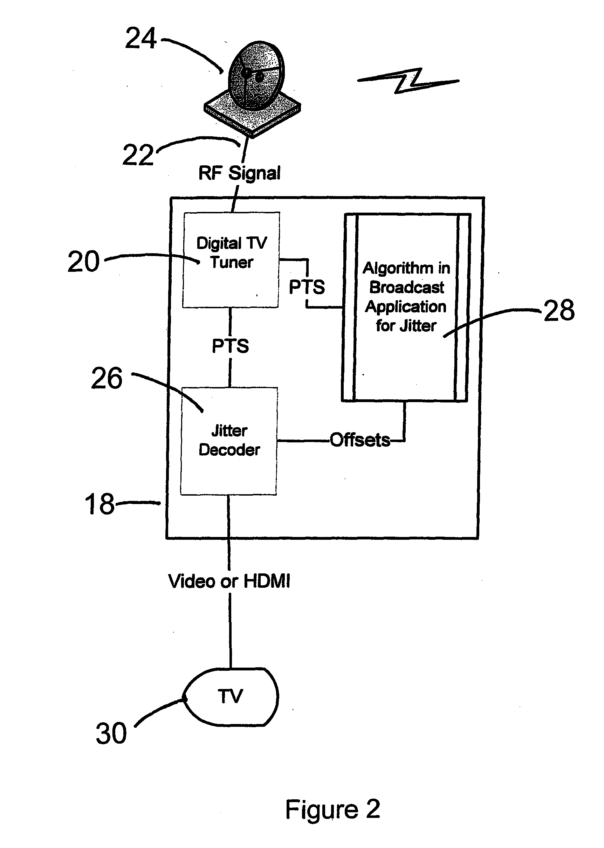

Figure 2 shows a schematic representation of a television receiver system 18. The receiver system 18 may be implemented as a digital set top box (STB) or may be integrated as a digital receiver into a television set. Alternatively, in the case of internet television transmission it may be implemented as functionality within a computer e.g. in a PC TV card or as an application on a PC.

The television receiver system 18 comprises a digital TV tuner 20 arranged to receive a digital TV signal 22 via a transmitter such as the satellite of a satellite broadcaster or a cable TV service provider 24. The receiver 18 includes a jitter decoder 26 and means 28 for decoding and storing the jitter algorithm. The jitter decoder 26 functions as a video offset controller to calculate the required offsets to be applied to individual frames so as to produce a stable video for watching by viewer.

In use, when a signal 22 including a jittered or shaken TV signal is received, this is processed or decoded by the digital TV tuner 20 such that data or meta data relating to the video, e.g. a data channel, including the MHEG application from the signal is provided to the processor 28. The MHEG application includes, embedded within it, the algorithm used to apply the jitter. The algorithm is therefore extracted from its location embedded within the MHEG application and is used in "reverse" to enable calculation of the required "counterjitter" or offsets to counteract the original offsets applied at the broadcaster.

A television 30 is provided for displaying the decoded images. As explained above, the system 18 may be integrated into a television or may be a separate stand alone unit such as a digital STB. The connection between the system 18 and the television 30, whether the system is integrated or not, may be by any known means, examples including, Video, HDMI, and RF.

It will be understood that both in the transmission system 2 and the receiver system 18, components may be provided within as dedicated hardware components or as software stored in memory arranged to execute the steps required or indeed as a combination of both.

Thus, in real-time, the frames and the required reverse offsets are provided to the jitter decoder or video offset controller to enable the unjittered video to be provided via the system output.

Any suitable means or method may be used to enable an authorised user to obtain details of the algorithm embedded within the MHEG application. One possible example includes an STB generating an ID number, and a user sending a text message to the broadcaster with the ID number. The user then receives an unlock code for their STB and this enables the MHEG-5 application to proceed with the execution of the algorithm to 'undo' the frame offsets. The MHEG-5 application could, receive new algorithms during the course of the broadcast.

It can be seen then that to prevent unauthorised viewing of the broadcast media, the video is first processed at source to 'shake' its visual content. A video is made up of a sequence of still images or frames. For any particular frame of the video, by offsetting the image from one frame to the next, e.g. by varying degrees, when played back, the resultant video image is seen to shake thereby rendering it impossible to view and appreciate the content.

The offset is preferably limited such that enough of the original image is retained for transmission. At the destination the receiver applies a reverse shake to render a stabilised image. The receiver is informed of the reverse offsets to be applied in the form of an algorithm which is preferably transmitted as part of or embedded within an MHEG-5 application.

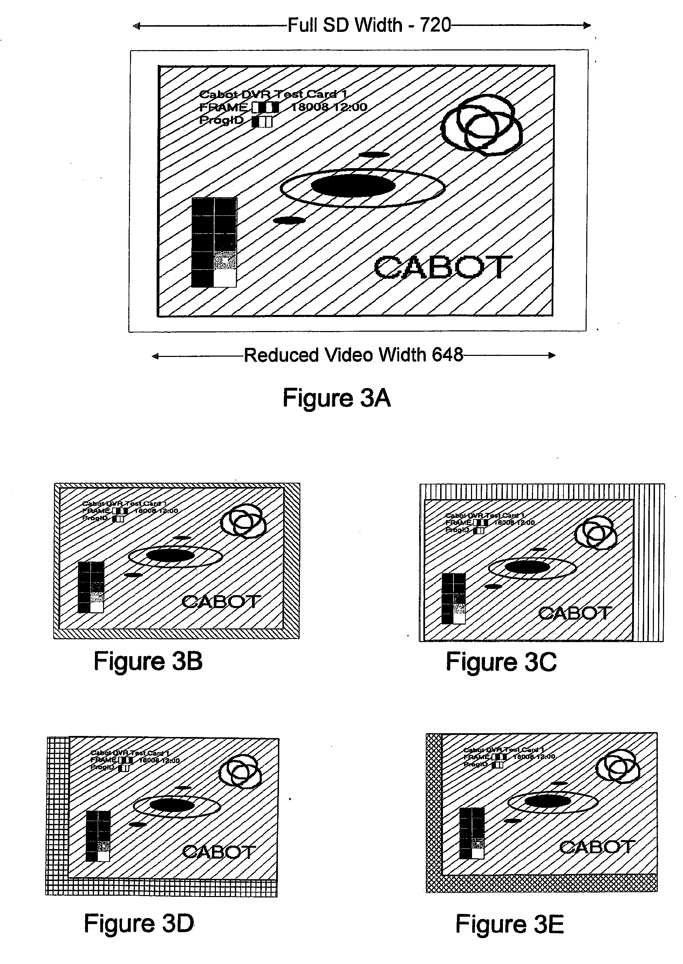

Figures 3A to 3E show screenshots of test screens using the method and apparatus described above. Figure 3A shows a representation of a screen shot of a test screen in which an original image of width 720 pixels has been truncated to have a width of 648 pixels. Figures 3B to 3E, respectively show the reduced width image of Figure 3A in four different positions within the larger available screen, i.e. top left, bottom left, top right and bottom right, respectively. If shown in sequence as frames of a video then the image will appear to jump around the screen and will be unviewable as defined above.

Standard digital video broadcast (DVB) decoders have output stages capable of offsetting the image to be rendered. This functionality is utilised to enable the video to be processed and watched as normal.

As explained above, information about the required offsets for individual frames within a DVB is preferably relayed in the form of a deeply embedded algorithm within a Digital TV Broadcast application (e.g. An MHEG-5 program) transmitted in tandem with the broadcast media. Typically MHEG-5 ingredients, content files and diversionary code may be used to hide the underlying algorithm. To ensure that the frame displayed has the appropriate offsets the algorithm is preferably tied to the frame's position within a sequence of frames. This can be achieved by use of the frames' respective PTS.

It is expected that encryption of a TV broadcast using such image transmission will be able to be cracked if sufficient computing power and enough time is expended to perform the image stabilisation. In the present case, the view protection is therefore time limited, such that it is particularly useful for the protection of something transmitted live, i.e. a football match, other sporting event, a live music concert etc. The value of such content decreases considerably after the event and hence little ongoing protection is required.

With the algorithm for image stabilisation embedded in an interactive broadcast TV application transmitted with the content it is extremely unlikely that anyone will be able to crack the encoding scheme during the life-time of the transmission.

In practice, digital visual content to be transmitted is first processed for transmission. Individual frames are preferably reduced in width and height so that a full-screen image in addition to the shake action provides an image entirely within the viewing area. There are a number of ways in which this can be achieved.

In one example, the original image is downscaled from fullSize to fullSize-maxOffset, thereby losing some content due to resolution. In an alternative example, the image is trimmed from fullSize to fullSize-maxOffset, again thereby losing the outer rim of the transmission. A further alternative involves the image being simply shifted so the outer rim of fullSize image falls outside the view area. In all cases the blank area revealed by the image shift is preferably filled with content less easily detectable by generic image stabilisation software.

In the case of downscaling, SD MPEG content with screen parameters of 720x576 could be reduced to 700x556 (i.e. still within the so-called Analogue safe area). This allows for a maximum deviation to the left or right or up or down of 20 pixels. Image stabilisation software can, in theory, defeat this mechanism. However using the above parameters the mechanism allows 399 different image positions from 1 frame to the next. With a typical event of a 1 hour 30 minutes and 25 frames per second such a decoding operation is only achievable for powerful and expensive processors. It is significantly beyond the ability of a typical end user's image stabilisation algorithm software.

Once processed, the counter-shaken movie should now appear shake free upon the view screen. However to further reduce the ability for an image-stabilising device to lock on to a shaking movie through detection of the black-border around the central image, the initial image shaking at source preferably renders the border part of the image as white noise or something similarly random.

Typical STBs are able to show a clipped/offset video image and thus can be programmed to hide the white noise. Alternatively an OSD border can be rendered to hide whatever is present.

An STB capable of showing the shake free image needs to incorporate the appropriate algorithm. To remove the shaking of the transmitted content requires knowledge of offsets applied to individual frames of the video and the required actions (reverse offsets). As explained above, this information is imparted to the receiver through transmission of an interactive broadcast application with a suitably embedded image stabilisation algorithm valid for the broadcast.

Typical Broadcast Applications are written in MHEG-5 (UK, NZ, Ireland), MHP (Italy), OpenTV - satellite. There will now be provided a specific non-limiting example of implementation using a MHEG-5 interactive TV application.

An MHEG-5 application with extensions implemented by a suitable receiver could be used to decode the image. An example of typical code for this purpose is as follows:

```
 Resident Program:
 {
    GetPresentationTimeStamp
 }
```

```
 Link 123:
  LinkEvent: FrameEvent # Extension to MHEG-5
  LinkEffect{
      # Algorithm for converting PTS into x, y offsets.
     SetVideoXYOffset( 100, 101 )
  }
 }
```

The algorithm used can be any suitable algorithm that is capable of calculating x,y offsets for a frame in dependence on the frame's PTS. In other words, the x,y offsets can be expressed as
Frame n Xoffset = F1(frame n PTS)
Frame n Yoffset = F2(frame n PTS)
in which the x and y offsets for a frame n are defined in dependence on the PTS of frame n by the functions F1 and F2, which may or may not be the same.

Some linear or other relationship may be used as the functions F1 and F2. Preferably the functions have some degree of randomness built in or are infused with diversionary code so as to make the algorithm harder to crack.

Thus it can be seen that at a high level the application required for providing the view protection is relatively simple. However, it is of sufficient complexity, such that is useful for the protection of a live or otherwise time critical transmission.

Figure 4 shows a schematic representation of a further example of a television transmission and receiver system. Like the transmission system of figure 1 and the receiver system of figure 2, the system comprises means for applying offsets to frames of a video at a transmitter in accordance with an algorithm and means for transmitting details of the algorithm together with the video offset data to an authorised user. In this case, the transmission is via the Internet and so the details of the MHEG-5 application and the embedded algorithm may be broadcast over the Internet using suitable communications protocols such as TCP/IP.

The transmission system 2 is substantially the same as that shown in and described above with reference to Figure 1. The internal components of the system are not shown. The receiver system 18 is substantially the same as that shown in and described above with reference to Figure 2. Again, the internal components are not shown. In this case however, instead of transmission taking place via an RF satellite transmission link, the transmission system 2 and the receiver system 18 are both connected to the Internet or some other such network through which it is possible to broadcast or transmit video data.

Embodiments of the present invention have been described with particular reference to the examples illustrated. However, it will be appreciated that variations and modifications may be made to the examples described within the scope of the present invention.

## Claims

1. A method of encoding a digital video broadcast, the method comprising:
at the broadcaster processing frames of a video so as to offset frames in accordance with a selected algorithm;
transmitting the offset frames;
transmitting details of the algorithm used to calculate frame offsets so as to enable a receiver to determine the algorithm and to process received images and remove the offsets.

2. A method according to claim 1, in which the images and the details of the algorithm are sent by the broadcaster as part of a single signal.

3. A method according to claim 1 or 2, in which the signal comprises a video channel and a data channel transmitted in parallel.

4. A method according to any of claims 1 to 3, in which the algorithm is transmitted embedded within an application of an interactive television language, such as MHEG-5.

5. A method according to any of claims 1 to 4, in which the image is offset by reducing the width of the frames and applying varying offsets to individual sequential frames such that the resultant video, when played back, appears to shake.

6. A method according to claim 5, in which the offsets are determined using the algorithm.

7. A method according to any of claims 1 to 6, comprising at a receiver, determining the algorithm used to offset the frames and calculating offsets applied to individual frames within the video in accordance with the algorithm.

8. A method according to claim 7, in which the calculated offsets are applied in reverse to the respective frames so as to remove the offset applied by the broadcaster.

9. A method according to any of claims 1 to 8, in which an offset is tied to any particular frame using frame identification data, e.g. the presentation time stamp of the frame, such that the right offset is assigned to the right frame.

10. Apparatus for encoding a digital video broadcast, the apparatus comprising:
a processor for determining an offset to be applied to frames of a video so as to displace the frames in accordance with an algorithm;
means to combine the displaced frames with details of the algorithm so as to be able to transmit details of the algorithm used to displace the frames with the frames themselves.

11. Apparatus according to claim 10, comprising memory containing a stored algorithm used to determine the displacement to be applied to respective frames in a video.

12. Apparatus according to claim 11, arranged to receive a stream of digital video frames and to receive determined offset values for the respective frames and being arranged to apply the determined offsets to the frames.

13. Apparatus according to any of claims 10 to 12, configured and arranged to perform the steps of the method of any of claims 1 to 9.

14. A method for decoding a digital video broadcast, the method comprising:
receiving a digital video broadcast including encrypted video data and data relating to the video data, e.g. a data channel;
extracting from the data relating to the video data details of an algorithm by which the video data is encrypted;
decoding the encrypted video data using the algorithm.

15. A method according to claim 14, comprising extracting the algorithm and the presentation time stamp of received frames so as to be able to determine an offset to be applied to each frame.

16. A method according to claim 15, comprising storing the extracted algorithm in memory and using the algorithm to calculate the required offset for each received frame.

17. A method according to any of claims 14 to 16, comprising applying the determined offsets to the frames thereby generating an output video stream.

18. A method according to claim 17, comprising:
providing an output video stream comprising the offset frames to a display; and,
displaying the output video stream.

19. Apparatus for decoding a digital video broadcast, the apparatus comprising:
a receiver for receiving a digital video broadcast including encrypted video data and data relating to the video data, e.g. a data channel;
a processor for extracting from the data relating to the video data details of an algorithm by which the video data is encrypted;
a decoder for decoding the encrypted video data using the algorithm.

20. Apparatus according to claim 19, wherein the decoder is arranged and configured to extract the algorithm and a frame identifier, e.g. a presentation time stamp identifying its position within a sequence of other frames, of received frames so as to be able to determine an offset to be applied to each frame.

21. Apparatus according to claims 19 or 20, configured and arranged to perform the method of any of claims 14 to 17, comprising memory to store the extracted algorithm.

22. A television system comprising apparatus for encoding a digital video broadcast according to any of claims 10 to 13 of the present invention and one or more apparatuses for decoding a digital video broadcast according to any of claims 19 to 21 of the present invention.
